Europäisches Patentamt

European Patent Office

Office européen des brevets

(19)

(11) **EP 0 753 731 A1**

## (12) DEMANDE DE BREVET EUROPEEN

(43) Date de publication:
**15.01.1997 Bulletin 1997/03**

(51) Int Cl.6: **G01N 7/00**

(21) Numéro de dépôt: **96401295.9**

(22) Date de dépôt: **14.06.1996**

(84) Etats contractants désignés:
**AT BE CH DE GB IT LI NL**

(30) Priorité: **11.07.1995 FR 9508493**

(71) Demandeur: **INSTITUT FRANCAIS DU PETROLE 92500 Rueil Malmaison (FR)**

(72) Inventeur: **Porot, Pierre 75010 Paris (FR)**

(54) **Procédé de contrôle d'un débit de fuite et application du procédé à la mesure du taux de gaz dans un liquide**

(57) -La présente invention a pour objet un procédé de contrôle d'un débit de fuites dans un système de mesure comprenant un élément sous pression, caractérisé en ce qu'il consiste à autoriser un débit de fuite proportionnel à la pression et à faire varier le débit dans le même sens que la pression.

- Le présent procédé permet d'appliquer des pressions moins élevées à l'élément sous pression pour obtenir un taux de gaz donné et donc d'atteindre plus rapidement le taux de gaz, en applicant des pressions moindres à l'élément sous pression.

FIG.3

EP 0 753 731 A1

# Description

La présente invention concerne le domaine des mesures comprenant un élément sous pression.

Plus précisément la présente invention a trait au contrôle d'un débit de fuite dans un système comprenant un élément mis sous pression.

La présente invention vise en particulier les procédés permettant de déterminer un taux de gaz présent dans un liquide, procédés tels que divulgués par exemple dans le brevet français FR 2 670 894.

Ce procédé connu consiste notamment à enfermer un échantillon d'un mélange gaz-liquide dans une chambre, à compresser ledit mélange et à mesurer la variation relative de volume ainsi que la variation de pression dans ladite chambre.

Ce type de procédé permet par exemple de déterminer avec précision le taux d'air dans l'huile alimentant un moteur à combustion interne.

Selon le document français précité, un taux de fuite faible, minimal est recherché car il semble que les fuites perturbent la mesure. On cherche donc selon cet art antérieur à éviter les fuites vers l'extérieur.

Or il a été découvert, de façon inattendue, que le débit de fuite n'as pas forcément un effet négatif sur la mesure.

En particulier il a été constaté qu'un faible débit de fuite est négligeable quand la pression elle-même est faible. En outre un débit de fuite plus important, associé à une pression elle aussi plus importante, n'a pas d'effet négatif sur le résultat de la mesure comme il va être explicité ci-après.

Ces objets et avantages sont atteints selon l'invention qui concerne un procédé de contrôle d'un débit de fuites dans un système de mesure comprenant un élément sous pression.

Conformément à l'invention le procédé de contrôle consiste à autoriser un débit de fuite sensiblement proportionnel à la pression et à faire varier le débit dans le même sens que la pression.

Une application préférée de l'invention concerne la détermination du taux de gaz présent dans un liquide. Selon cette application, le procédé permet d'appliquer des pressions élevées à l'élément sous pression pour obtenir un taux de gaz donné.

En outre l'invention permet de déterminer plus rapidement le taux de gaz, en appliquant à l'élément sous pression des pressions moindres vis-à-vis de l'art antérieur.

D'autres caractéristiques, détails et avantages de la présente invention apparaîtront mieux à la lecture de la description qui va suivre, faite à titre illustratif et nullement limitatif en référence aux figures annexées selon lesquelles :

- La figure 1 est une représentation schématique d'un ensemble de mesure du taux de gaz dans un liquide, selon l'art antérieur;

- La figure 2 est une courbe obtenue selon l'art antérieur, définie par le logarithme de la variation relative de volume échantillonné en fonction du logarithme de la pression appliquée à l'échantillon; et

- La figure 3 montre deux courbes l'une (B) obtenue selon l'invention et l'autre (A) selon l'art antérieur toutes deux définies par les mêmes paramètres que la courbe de la figure 2.

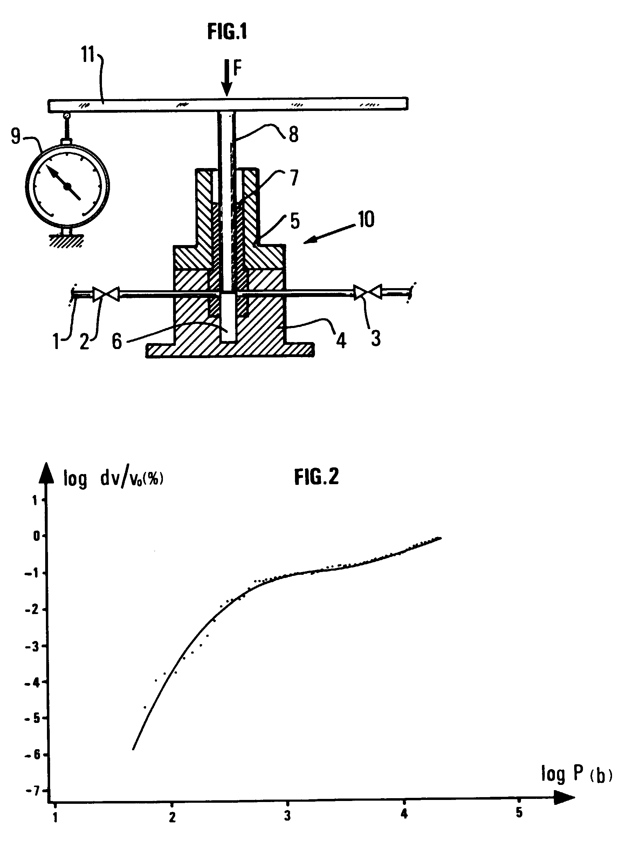

La figure 1 montre, en coupe longitudinale, un dispositif 10 grâce auquel peuvent être effectuées des mesures de volume et de pression. Une conduite 1 permet l'arrivée du mélange dans le dispositif 10. Deux vannes 2, 3, l'une en amont, l'autre en aval du dispositif, sont destinées à isoler le dispositif 10 du reste de la conduite. Le dispositif comporte un carter qui peut être constitué de deux parties 4, 5, et qui renferme la cavité 6 cylindrique, indéformable, de réception du mélange. Un élément d'étanchéité 7 entoure un piston 8 destiné à compresser le mélange. La conduite d'alimentation 1 traverse de part en part le carter inférieur 4 et débouche en partie supérieure de la cavité 6. Le piston 8 coaxial à la cavité 6, peut isoler celle-ci vis-à-vis de la conduite d'alimentation 1 en obturant sa partie supérieure.

Tout moyen additionnel peut en outre être prévu afin d'isoler la cavité 6 vis-à-vis de la conduite d'alimentation 1 en obturant sa partie supérieure.

Un déplacement axial du piston 8 permet de compresser le mélange à l'intérieur de la cavité 6. Ce déplacement est mesuré par tout moyen connu en soi, tel que le capteur de déplacement repéré 9 sur la figure 1. Un élément horizontal 11, en contact avec le piston 8 et un capteur de déplacement 9, permet de repérer le niveau du piston 8 et transmet donc au capteur 9 tout déplacement du piston.

La courbe expérimentale obtenue selon la figure 2 donne la compression volumique relative de l'échantillon en fonction de la pression relative appliquée à l'échantillon. Cette courbe présente un point d'inflexion dont l'ordonnée correspond au taux de gaz présent dans le liquide échantillonné.

Selon cette courbe donnée à titre illustratif, le point d'inflexion apparaît pour un log P sensiblement supérieur à 3, ce qui correspond à des pressions réelles de l'ordre de 1000 bars sur l'échantillon. Ces pressions sont parfois longues à obtenir, en particulier lorsque l'on doit avoir une montée en pression lente. Par ailleurs, l'échantillon ne supporte pas toujours de telles pressions : il peut se dégrader, se décomposer... avant que le point d'inflexion apparaisse.

Avantageusement, cette limitation n'existe pas lorsque l'invention est mise en oeuvre.

En effet la presente invention permet de décaler le point d'inflexion en abscisse mais pas en ordonnée. Autrement dit, la valeur recherchée, ici le taux de gaz dans le liquide, est inchangé par rapport à l'art antérieur.

En revanche, la pression à appliquer est réduite, d'un facteur pouvant aller jusqu'à 10.

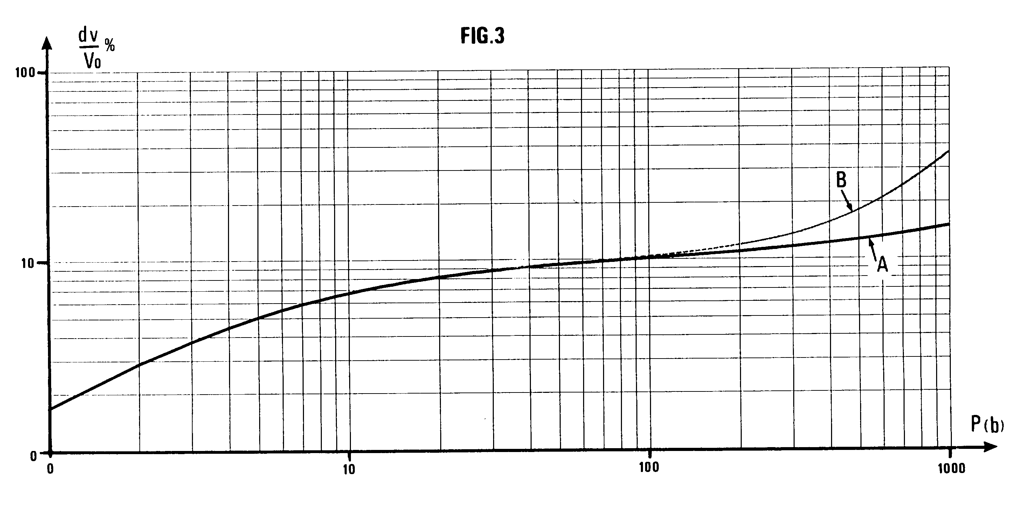

La figure 3 illustre bien cette différence. Elle concerne une mesure du taux d'air dans de l'huile. On peut voir sur cette figure une courbe A (en traits pleins) selon l'art antérieur et une courbe B (en traits pointillés) selon l'invention, toutes deux variant autour d'un point d'inflexion. Ces courbes varient différemment au-delà d'une certaine pression relative de l'échantillon ; la courbe A varie peu en ordonnée, elle reste plate très longtemps, laissant ainsi une indétermination plus longue sur le point d'inflexion.

La courbe B, obtenue en établissant et en contrôlant un débit de fuite selon l'invention laisse apparaître un point d'inflexion dès 200 bars de pression relative. Dans les mêmes conditions, il faut atteindre selon l'art antérieur au moins 500 bars de pression relative pour qu'un point d'inflexion puisse être déterminé.

Avantageusement, de nombreuses mesures ont montré que le point d'inflexion n'est nullement décalé en ordonnée.

Il s'agit donc selon l'invention d'établir, au niveau de l'élément mis en pression, un débit de fuite proportionnel à la pression : on établit un débit faible négligeable quand la pression est faible et on crée un débit de fuite plus important quand la pression est plus forte.

Selon l'application préférée de l'invention illustrée par la figure 3, un faible débit est créé dans la première partie de la courbe c'est-à-dire pour des pressions de quelques dizaines de bars. Un débit plus important est en outre établi quand on approche du point d'inflexion de la courbe c'est-à-dire quand on est sur la partie la plus plate de la courbe.

Vis-à-vis de l'art antérieur, la présente invention permet donc d'appliquer des pressions moins élevées à l'élément sous pression pour l'obtention d'un taux de gaz donné.

Ainsi selon l'invention on atteint plus rapidement le taux de gaz en appliquant des pressions moindres à l'élément sous pression.

Selon une première approximation théorique, on peut en effet écrire que le débit de fluite ($Q_F$) est proportionnel à la pression de l'échantillon (P) : $Q_F = K.P$.

En référence à la courbe de la figure 3, le débit de fuite ($Q_F$) doit être inférieur au débit D de compressibilité de l'huile en-decà du point d'inflexion, et ce même débit doit être supérieur au débit de compressibilité de l'huile au-delà du point d'inflexion.

On sait que

$$D = \frac{V_o}{B} \times \frac{dP}{dt}$$

où

$V_o$ = volume initial de l'échantillon
$B$ = module de compressibilité de l'huile (cas d'application de la figure 3) $\cong 15 \times 10^8$ Pa
$\frac{dP}{dt}$ = vitesse de compression $\cong$ 1 bar/s.

Autour de 100 bars, la fuite équivaut au débit de compressibilité.

$$Q_F = KP = \frac{V_o}{B} \times \frac{dP}{dt} \Rightarrow K = \frac{V_o}{B.P} \times \frac{dP}{dt}$$

Soit :

$$K = \frac{10^5 \times V_o}{15 \times 10^8 \times 10^7} = 6,6 \times 10^{-12} \times V_o$$

En dessous du point d'inflexion, c'est-à-dire pour des pression sur l'échantillon inférieures à 100 bars ; de l'ordre de 10 bars par exemple :

$$Q_F < KP$$

$$Q_F < 6,6 \times 10^{-12} \times V_o \times 10^6$$

$$Q_F < 6,6 \times 10^{-6} \times V_o.$$

Pour des pressions de l'ordre de 100 bars et plus :

$$Q_F > 6,6 \times 10^{-12} \times V_o \times 10^7$$

$$Q_F > 6,6 \times 10^{-5} \times V_o.$$

Les valeurs données ci-dessus le sont à titre indicatif et nullement limitatif, pour la détermination du taux d'air dans de l'huile.

La présente invention représente une réelle amélioration de ce domaine de mesures et elle peut bien entendu être généralisée à toutes mesures comprenant un élément mis sous pression, dans les conditions énoncées ci-avant.

**Revendications**

1. Procédé de contrôle d'un débit de fuites dans un système de mesure comprenant un élément sous pression, caractérisé en ce qu'il consiste à autoriser un débit de fuite sensiblement proportionnel à la pression et à faire varier le débit dans le même sens que la pression.

2. Application du procédé selon la revendication 1, à la détermination du taux de gaz présent dans un liquide, caractérisé en ce qu'il permet d'appliquer des pressions moins élevées à l'élément sous pression pour obtenir un taux de gaz donné.

3. Application selon la revendication 2, caractérisée en ce qu'il permet d'atteindre plus rapidement le taux de gaz, en appliquant des pressions moindres à l'élément sous pression.

**FIG.1**

**FIG.2**

FIG.3

EP 0 753 731 A1

EP 0 753 731 A1

Office européen des brevets

**RAPPORT DE RECHERCHE EUROPEENNE**

Numero de la demande

EP 96 40 1295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 349 374 (INST FRANCAIS DU PETROL) 3 Janvier 1990 <br> * le document en entier * <br> --- | 1-3 | G01N7/00 |
| D,A | FR-A-2 670 894 (INST FRANCAIS DU PETROL) 26 Juin 1992 <br> * abrégé * <br> --- | 1-3 | |
| A | DE-A-25 14 625 (HOEYER AS O G) 9 Octobre 1975 <br> * revendications * <br> --- | 1 | |
| A | EP-A-0 521 753 (SOCIETE INDUSTRIELLE DE LIAISONS ELECTRIQUES) 7 Janvier 1993 <br> * le document en entier * <br> --- | 1 | |
| A | US-A-4 694 849 (RAMPEN WILLIAM H S) 22 Septembre 1987 <br> * colonne 3, ligne 35 - colonne 6, ligne 17 * <br> ----- | 1 | |
| | | | **DOMAINES TECHNIQUES RECHERCHES (Int.Cl.6)** <br><br> G01N |

Le présent rapport a été établi pour toutes les revendications

| Lieu de la recherche | Date d'achèvement de la recherche | Examinateur |
|---|---|---|
| LA HAYE | 16 Octobre 1996 | Bindon, C |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

.......................................................................
& : membre de la même famille, document correspondant

EPO FORM 1503 03.82 (P04C02)

7